(19) Europäisches Patentamt
European Patent Office
Office européen des brevets

(11) **EP 1 271 005 B1**

(12) **FASCICULE DE BREVET EUROPEEN**

(45) Date de publication et mention
de la délivrance du brevet:
**27.07.2011 Bulletin 2011/30**

(51) Int Cl.:
*F16H 61/02* *(2006.01)*     *F16H 59/70* *(2006.01)*
*F16H 63/42* *(2006.01)*

(21) Numéro de dépôt: **02011656.2**

(22) Date de dépôt: **31.05.2002**

(54) **Procédé et dispositif de reconnaissance de rapport de boite de vitesses**

Verfahren und Vorrichtung zur Erkennung der Schaltposition eines Schaltgetriebes

Method and device for recognizing the shift position of gearbox

(84) Etats contractants désignés:
**FR**

(30) Priorité: **18.06.2001 FR 0107967**

(43) Date de publication de la demande:
**02.01.2003 Bulletin 2003/01**

(73) Titulaire: **Continental Automotive France**
**31100 Toulouse (FR)**

(72) Inventeurs:
• **Atanasyan, Alain**
**31820 Pibrac (FR)**

• **Burietz, Pierre-Marie**
**31860 Labarthe sur Leze (FR)**
• **Cremona, Patrick**
**31850 Mondouzil (FR)**
• **Raud-Ducros, Nathalie**
**31370 Berat (FR)**

(74) Mandataire: **Bonn, Roman Klemens et al**
**Continental Automotive GmbH**
**Patente und Lizenzen**
**Postfach 22 16 39**
**80506 München (DE)**

(56) Documents cités:
**DE-A1- 4 333 822     FR-A- 2 752 031**

## Description

La présente invention concerne un procédé et un dispositif de reconnaissance de rapport de boîte de vitesses. Elle s'applique, en particulier, à la gestion optimale du couple moteur par un calculateur de commande de moteur.

Un calculateur de commande de moteur, qui commande, par exemple, l'allumage ou l'injection, a besoin de connaître le rapport de boite engagé ou l'absence de rapport engagé (boîte au point mort ou embrayage désaccouplé) pour gérer au mieux le couple moteur, par exemple pour l'entrée en phase de ralenti ou lors du passage de rapports.

Dans ce but, le document générique FR 2 752 031 (Siemens AG) présente un procédé dans lequel, le ratio vitesse de rotation moteur-entrée de boîte (régime moteur N) / vitesse de rotation roues-sortie de boite (vitesse véhicule V) est comparé à un jeu de deux seuils encadrant une valeur nominale correspondant à chaque rapport de boîte de vitesse. Ce procédé présente plusieurs inconvénients. Si les deux seuils du même jeu correspondant à un rapport sont trop près de la valeur nominale relative à ce rapport, les variations du ratio N/V dues à l'élasticité et au jeu de la transmission entraînent des détections de changement de rapport erronées (de brève durée) qui, une fois interprétées par le calculateur de commande, causent des désagréments de conduite. Inversement, si les seuils correspondant à un rapport sont trop éloignés de la valeur nominale relative à ce rapport, la détection d'un passage de rapport est retardée et le calculateur de commande ne dispose pas assez tôt de l'information de changement de rapport. Pour éviter les fausses détections, par exemple dues aux appuis et levées brusques sur la pédale d'accélérateur sans changement de rapport, connues sous le nom de "tip in tip out", ce procédé utilise un capteur d'embrayage qui rend ce procédé difficile et coûteux à mettre en oeuvre.

La présente invention vise à remédier à ces inconvénients.

A cet effet, un premier aspect de la présente invention vise un procédé de reconnaissance du rapport engagé d'une boîte de vitesses d'un véhicule automobile, procédé mettant en oeuvre un signal correspondant à la vitesse de rotation d'entrée de la boîte et un signal correspondant à la vitesse de rotation de sortie de la boîte, comportant une opération de détermination d'engagement de rapport au cours de laquelle on détermine quel rapport de boîte est engagé, en fonction de la position relative du ratio desdits signaux et de valeurs limites d'au moins un jeu de valeurs limites, chaque jeu de valeurs limites correspondant à un rapport de boîte ; caractérisé en ce qu'il comporte une opération de sélection au cours de laquelle, pour au moins un rapport de boîte, on sélectionne le jeu de valeurs limites entre au moins deux jeux de valeurs limites potentielles.

Grâce à ces dispositions, pour sélectionner chaque jeu de valeurs limites, on peut tenir compte de facteurs tels que, par exemple, des données instantanées représentatives du fonctionnement du moteur, de la position de pédales (accélérateur et/ou embrayage), du rapport engagé, de jeux de transmission et de valeurs passées de ces données, de telle manière que la détection du rapport engagé est à la fois fiable et rapide.

On observe que, au sens de la présente invention, on considère non seulement les rapports de démultiplication correspondant aux différents rapports de boîte, mais aussi un rapport de boîte "0" qui est dit "engagé" lorsque soit aucun rapport de boîte n'est engagé soit l'embrayage est débrayé.

Un deuxième aspect de la présente invention vise un dispositif de reconnaissance du rapport engagé d'une boîte de vitesses d'un véhicule automobile, comportant un capteur de vitesse de rotation d'entrée de boîte fournissant un signal correspondant à la vitesse de rotation d'entrée de la boîte et un capteur de vitesse de rotation de sortie de boîte fournissant un signal correspondant à la vitesse de rotation de sortie de la boîte, comportant un moyen de détermination d'engagement de rapport qui détermine quel rapport de boîte est engagé, en fonction de la position relative du ratio desdits signaux et de valeurs limites d'au moins un jeu de valeurs limites, chaque jeu de valeurs limites correspondant à un rapport de boîte ; caractérisé en ce qu'il comporte un moyen de sélection de jeu de valeurs limites qui, pour au moins un rapport de boîte, sélectionne le jeu de valeurs limites entre au moins deux jeux de valeurs limites potentielles.

Ainsi, au moins un jeu de valeurs limites sélectionné est variable dans le temps. Par exemple, au moins deux jeux de valeurs limites potentielles sont mis en oeuvre et l'un des jeux de valeurs limites est sélectionné en fonction de paramètres de fonctionnement du moteur. Les jeux de valeurs limites sont dits "étroit" ou "large" selon que les différences entre les valeurs limites de ce jeu et la valeur nominale (rapport de démultiplication prédéterminé) est faible ou élevée. La sélection du jeu de valeurs limites peut, par exemple, dépendre de la valeur prise par la charge du moteur et/ou la variation du régime moteur pendant un intervalle de temps précédant l'opération de sélection de valeur limite.

Par exemple, il est probable que l'on est en présence d'un changement de rapport lorsque la position du papillon des gaz est fermée ou lorsque l'état moteur n'est ni en pleine charge ni en charge partielle. Un autre indice de changement de rapport est que, pendant un certain temps de "sélection" prédéterminée, la valeur absolue de la dérivée par rapport au temps (ou gradient) de la vitesse de rotation en entrée de boîte n'excède pas un seuil prédéterminé et si, pendant la durée de sélection, la dérivée par rapport au temps de la vitesse de rotation en entrée de boîte conserve son signe, c'est-à-dire que la vitesse de rotation en entrée de boîte reste croissante ou décroissante.

Aussi, lorsqu'un rapport de boîte est engagé et lorsque ces deux conditions sont respectées, le jeu de valeurs limites "étroit" est sélectionné pour détecter plus rapidement tout changement de rapport. Lorsque l'une des deux valeurs limites du jeu "étroit" est franchie par le ratio N/V pendant une durée prédéterminée, un changement de rapport est détecté.

Au contraire, lorsque l'une des deux conditions n'est pas respectée, le jeu de valeurs limites "large" est sélectionné pour ne pas confondre des oscillations "normales" de la vitesse de rotation en entrée de boîte (dues par exemple à un "pompage" du conducteur sur sa pédale d'accélérateur et aux jeux et à l'élasticité de la transmission) avec des changements de rapport et éviter ainsi de fausses détections.

D'autres avantages, buts et caractéristiques de la présente invention ressortiront de la description qui va suivre, faite dans un but explicatif et nullement limitatif en regard du dessin annexé dans lequel :

la figure 1 représente, schématiquement, les constituants essentiels de l'entraînement d'un véhicule automobile,

la figure 2 représente un diagramme théorique des rapports d'une boîte à cinq vitesses,

la figure 3 représente un diagramme de ratios de vitesses d'entrée et de sortie de boîte, pour une boîte à cinq vitesses,

la figure 4 représente un organigramme de reconnaissance du rapport engagé,

la figure 5 représente un relevé de ratios de vitesses d'entrée et de sortie de boîte, au cours d'un changement de rapport, et

la figure 6 représente un relevé de ratios de vitesses d'entrée et de sortie de boîte, lors de pompage sur la pédale d'accélération.

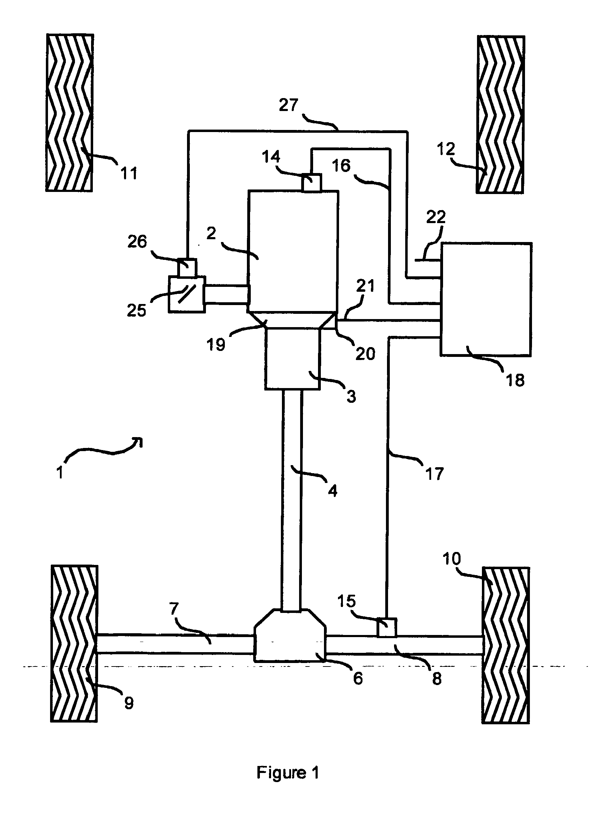

Un entraînement de véhicule automobile 1 représenté schématiquement en figure 1 comporte un moteur 2, un volet d'entrée d'air (papillon des gaz d'un boîtier papillon) 25 et une boîte de vitesses 3 qui est reliée, par l'intermédiaire d'un embrayage 5 et, par exemple par un arbre à cardans ou un arbre articulé 4, à un train d'engrenages d'essieu 6 (l'essieu arrière en figure 1.) Le train d'engrenages d'essieu 6, ou différentiel, est lui-même relié par des arbres d'essieu 7 et 8 à des roues motrices 9 et 10, respectivement. Dans le cas de la figure 1, les roues avant 11 et 12 ne sont pas motrices. Cependant, dans d'autres modes de réalisation, ce sont les roues avant 11 et 12 qui sont motrices ou toutes les roues du véhicule 1 sont motrices.

Un premier capteur de vitesse de rotation 14 sert à déterminer la vitesse de rotation du moteur N et produit un signal représentatif de la vitesse de rotation du moteur. La vitesse de rotation du moteur N coïncide avec la vitesse de rotation d'un arbre d'entrée (non représenté) de la boîte de vitesses 3. Un second capteur de vitesse de rotation 15 sert à déterminer la vitesse de rotation en sortie de boîte de vitesse V. On observe que le capteur de vitesse de rotation en sortie de boîte peut être configuré de plusieurs manières, en fonction des équipements dont on souhaite munir le véhicule. Préférentiellement, le capteur 15 comporte un odomètre en sortie de boîte de vitesse. Selon une variante représentée en figure 1, le capteur 15 capte la vitesse de rotation d'au moins une roue (préférentiellement une roue motrice) et produit un signal représentatif de la vitesse du véhicule 1 qui, en tenant compte du rapport de démultiplication dans le train d'engrenages d'essieu 6, est pratiquement proportionnelle à la vitesse de rotation V de l'arbre de sortie de la boite de vitesse 3. Un des moyens pour réaliser une telle variante consiste à utiliser des mesures de vitesse de rotation de roues provenant d'un dispositif anti-blocage de roues et à effectuer la moyenne de ces mesures pour les roues motrices ou pour toutes les roues.

Les signaux des capteurs de vitesse de rotation 14 et 15 sont transmis par des lignes 16 et 17, respectivement, à un calculateur de commande de moteur 18. Dans les variantes d'exécution où un capteur 26 de position du volet d'entrée d'air 25 est prévu, ce capteur 26 transmet au calculateur 18 un signal représentatif de la position du papillon des gaz, sur une ligne 27. Dans les variantes d'exécution où un capteur 20 de position de l'embrayage 5 (embrayage engagé ou désengagé) est prévu, ce capteur 20 transmet au calculateur 18 un signal représentatif de la position de l'embrayage 5 sur une ligne 21. Préférentiellement, un tel capteur d'embrayage 20 est un capteur de début de course plutôt qu'un capteur de fin de course pour limiter les délais de détection de changement de position de la pédale d'embrayage. D'autres lignes de commande et de signaux 22 peuvent relier le calculateur 18 à différents autres capteurs et actionneurs du véhicule, par exemple, une commande d'allumage et/ou une commande d'injection.

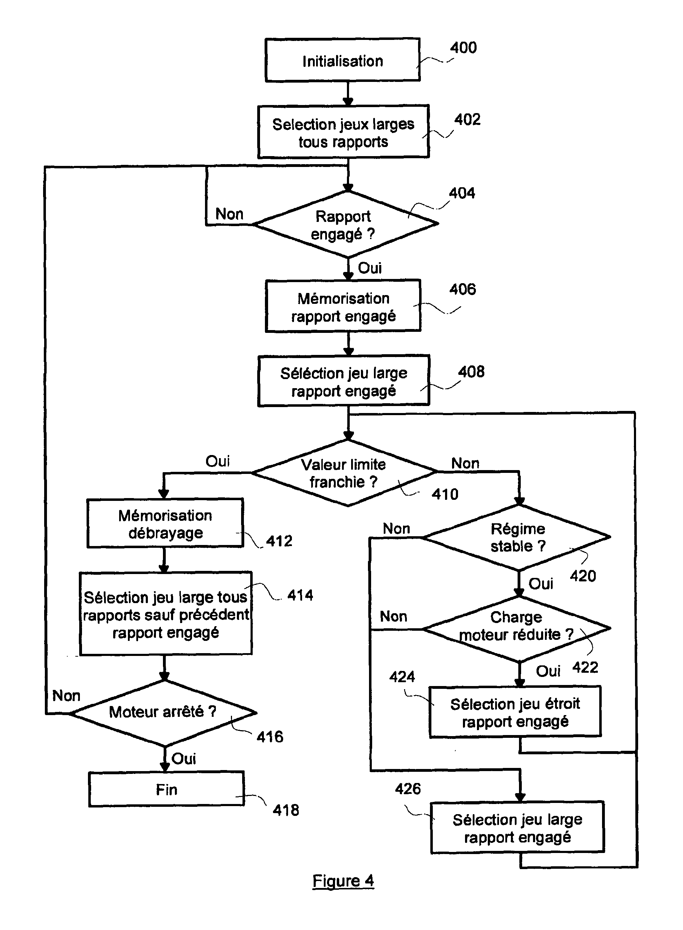

Conformément à la présente invention, pour déterminer le rapport de boîte engagé, le calculateur 18 détermine la valeur instantanée (éventuellement filtrée) du ratio N/V, sélectionne un jeu de valeurs limites, et compare le ratio N/V aux valeurs limites du jeu de valeur limite sélectionné. Dans des modes de réalisation particuliers, le calculateur 18 met en oeuvre l'organigramme illustré en figure 4. On observe que, dans toute la description, on considère non seulement les rapports de démultiplication correspondant aux différents rapports de boîte, mais aussi un rapport de boîte "0" qui est dit "engagé" soit lorsque aucun rapport de boîte n'est engagé (point mort) soit lorsque l'embrayage est désaccouplé. Ainsi, le passage d'un rapport de boîte à un autre comporte deux changements de rapport engagé.

En particulier, lorsqu'un rapport de boîte est engagé, le calculateur 18 sélectionne chaque jeu de valeurs limites entre deux jeux de valeurs limites potentiels et sélectionne le jeu de valeurs limites étroit associé au rapport de démultiplication engagé, lorsque à la fois :

soit le moteur n'est ni à pleine charge ni en charge partielle soit le papillon de gaz est fermé (la charge du moteur peut être déterminée par calcul et la position du papillon de gaz peut être fournie par un capteur, sachant qu'il n'est pas nécessaire de disposer simultanément des deux informations en question), et

la valeur absolue de la dérivée par rapport au temps de la vitesse de rotation en entrée de boîte n'a pas excédé un seuil prédéterminé et si, pendant la durée de sélection, la dérivée par rapport au temps de la vitesse de rotation en entrée de boîte a conservé son signe, c'est-à-dire que la vitesse de rotation en entrée de boîte est restée croissante ou décroissante.

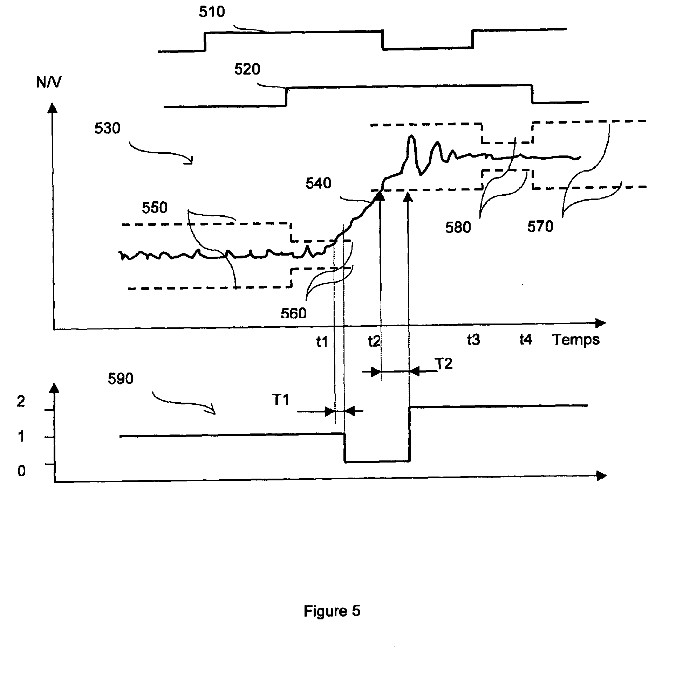

Lorsqu'un rapport était engagé, le calculateur 18 détecte le dégagement de ce rapport (engagement d'un rapport 0 - zéro) lorsque le ratio N/V sort du jeu de valeurs limites sélectionné pendant une durée T1 (fig.5) dite "de confirmation".

Dans des modes de réalisation particuliers, lorsque aucun rapport de boîte n'est engagé, le calculateur 18 sélectionne le jeu de valeurs limites étroit associé au rapport de démultiplication précédemment engagé et le jeu de valeurs limites large pour les autres rapports de boîte.

Lorsque aucun rapport n'était engagé, le calculateur 18 détermine l'engagement d'un nouveau rapport lorsque, pendant une durée T2 (fig.5) dite "de validation", le ratio N/V pénètre et reste entre les valeurs limites du jeu de valeurs limites sélectionné pour ledit rapport de démultiplication. Les durées de validation, de confirmation et de sélection sont, par exemple, chacune entre 100 à 200 ms.

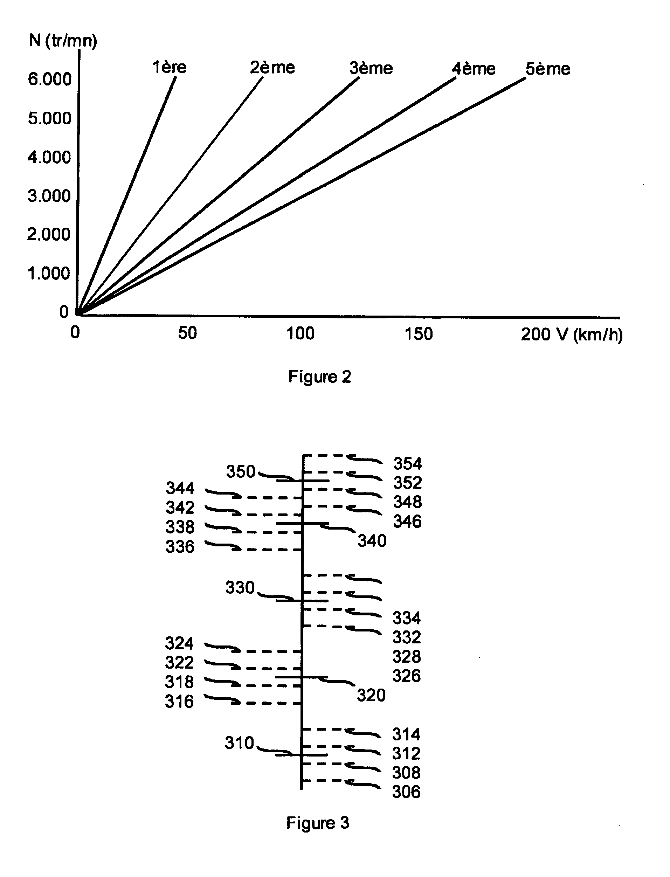

Dans le diagramme théorique des rapports de boîte représenté en figure 2, la vitesse de rotation de moteur N est représentée en fonction de la vitesse de rotation en sortie de boîte de vitesse V pour les différents rapports d'une boîte de vitesses. Le diagramme représenté en figure 2 concerne une boîte à cinq rapports de transmission. Le diagramme de la figure 2 montre que chaque rapport de boîte possède un ratio N/V fixe appelé "valeur nominale".

Les figures 3, 5 et 6 représentent des valeurs du ratio N/V et deux jeux de valeurs limites associés à chaque rapport de boite. Cependant, selon des variantes d'exécution de la présente invention :

- plus de deux jeux de valeurs limites sont utilisés pour au moins un rapport de boîte,
- au moins un jeu de valeurs limites progressivement variables en fonction de l'une au moins des vitesses d'entrée ou de sortie de boîte est utilisé et/ou
- au moins un jeu de valeurs limites progressivement variables dans le temps en fonction de paramètres de fonctionnement du moteur est utilisé.

En figure 3, on observe cinq valeurs nominales 310, 320, 330, 340 et 350 du ratio N/V correspondant aux rapports de boîte. A chaque rapport de boîte est associé un jeu de valeurs limites "étroit" comportant une valeur limite inférieure proche de la valeur nominale pour ledit rapport de boîte, 308, 318, 328, 338 et 348, respectivement, et une valeur limite supérieure proche de la valeur nominale pour ledit rapport, 312, 322, 332, 342 et 352, respectivement. A chaque rapport de boîte est aussi associé un jeu de valeurs limites "large" comportant une valeur limite inférieure éloignée de la valeur nominale pour ledit rapport, 306, 316, 326, 336 et 346, respectivement, et une valeur limite supérieure éloignée de la valeur nominale pour ledit rapport, 314, 324, 334, 344 et 354, respectivement.

On observe que la valeur limite supérieure large associée à un rapport peut être supérieure à la valeur limite inférieure large associée au rapport suivant. Par exemple, le seuil 344 est supérieur au seuil 346.

Pour éviter de détecter de manière erronée une changement de rapport, par exemple lorsque aucun rapport de boîte n'est engagé et que le ratio N/V peut prendre des valeurs qui correspondent successivement à différents rapports de boîte, on adopte les dispositions suivantes :

On mesure les vitesses de rotation en entrée de boîte de vitesses N et en sortie de boîte de vitesses V, à l'aide de signaux issus de capteurs de vitesse angulaire placé en entrée de boîte et en sortie de boîte ;
On calcule le ratio N/V ;
On sélectionne au moins un jeu de valeurs limites pour au moins un rapport de boîte ; et
On détermine quel rapport de boîte est engagé en fonction de la position relative du ratio N/V et des valeurs limites de chaque jeu de valeurs limites sélectionné.

Préférentiellement, lorsque aucun rapport de boîte n'est engagé et que l'on cherche à détecter quel rapport de boîte est ensuite engagé, on sélectionne les jeux de valeurs limites larges sauf pour le rapport de boîte qui était précédemment engagé, s'il y en avait un, pour lequel on sélectionne le jeu de valeurs limites étroit.

Préférentiellement, lorsqu'un rapport est engagé et que l'on cherche à détecter le désengagement dudit rapport, on sélectionne pour ledit rapport le jeu de valeurs limites étroit seulement lorsque les trois conditions suivantes sont réunies :

- le papillon de gaz est fermé ou l'état du moteur n'est ni en pleine charge ni en charge partielle,
- la valeur absolue de la dérivée par rapport au temps de la vitesse de rotation en entrée de boîte n'a pas excédé un seuil prédéterminé pendant une durée de sélection prédéterminée, et
- pendant la durée de sélection, la dérivée par rapport au temps de la vitesse de rotation en entrée de boîte a conservé son signe, c'est-à-dire que la vitesse de rotation en entrée de boîte est restée croissante ou décroissante.

Dans l'organigramme de reconnaissance de rapport de boîte de vitesses illustré en figure 4, on observe, tout d'abord, une étape d'initialisation 400, qui a lieu lors du démarrage du véhicule, au cours de laquelle un premier registre du calculateur 18 qui conserve le dernier rapport de boîte engagé est mis à "0". Au cours d'une étape 402, tous les jeux de valeurs limites larges sont sélectionnés.

Ensuite, au cours d'une étape 404, on détecte si un rapport est engagé en déterminant si le ratio des vitesses de rotation en entrée de boîte de vitesses N et en sortie de boîte de vitesses V, se trouve entre deux valeurs limites d'un jeu de valeurs limites sélectionné correspondant à un rapport de boîte, et ce pendant une durée de validation prédéterminée, par exemple de 200 ms. Sinon, l'étape 404 est réitérée. Si oui, au cours d'une étape 406, on mémorise dans un deuxième registre conservant le rapport de boîte engagé le rapport correspondant au jeu de valeurs limites entre lesquelles se trouve le ratio N/V. Par exemple, si le premier rapport est engagé, on mémorise "1" dans le deuxième registre.

Puis, au cours d'une étape 408, on sélectionne le jeu de valeurs limites large correspondant au rapport de boîte engagé. Au cours d'une étape 410, on détecte si un débrayage a lieu en déterminant si, pendant une durée de confirmation, par exemple 150 ms., le ratio N/V franchit l'une des valeurs limites du jeu de valeurs limites sélectionné. Si oui, au cours d'une étape 412, on transfère le rapport de boîte conservé dans le deuxième registre vers le premier registre (précédent rapport de boîte engagé) et on mémorise "0" dans le deuxième registre pour signifier qu'aucun rapport de boîte n'est engagé. Puis, au cours d'une étape 414, on sélectionne tous les jeux de valeurs limites larges, sauf pour le précédent rapport de boîte engagé pour lequel on sélectionne le jeu de valeurs limites étroit. Au cours d'une étape 416, on détermine si le moteur est arrêté. Si oui, le fonctionnement du calculateur est arrêté, étape 418, et sinon, l'étape 404 est réitérée.

S'il n'a pas été détecté de débrayage au cours de l'étape 410, au cours d'une étape 420, on détecte si le régime moteur est stable en déterminant si, pendant une durée de sélection prédéterminée, par exemple 100 ms., la valeur absolue de la dérivée par rapport au temps de la vitesse de rotation en entrée de boîte n'excède pas un seuil prédéterminé et si, pendant la durée de sélection, la dérivée par rapport au temps de la vitesse de rotation en entrée de boîte conserve son signe, c'est-à-dire que la vitesse de rotation en entrée de boîte reste croissante ou décroissante.

Si l'une de ces conditions n'est pas remplies, au cours d'une étape 426, on sélectionne le jeu de valeurs limites large correspondant au rapport de boîte engagé, puis on réitère l'étape 410. Si les deux conditions de l'étape 420 sont remplies, au cours d'une étape 422, on détermine si soit le papillon de gaz est fermé, soit l'état du moteur n'est ni à pleine charge ni en charge partielle. Si l'une des conditions de l'étape 422 est remplie, au cours d'une étape 424, on sélectionne le jeu de valeurs limites étroit pour le rapport de boîte engagé puis on réitère l'étape 410. Si aucune des conditions de l'étape 422 n'est remplie, on effectue l'étape 426.

Selon une variante, au cours de l'étape 404, on filtre le ratio N/V pour ne conserver que les basses fréquences, par exemple inférieures à 10 Hz ou à 20 Hz, avant de déterminer si le ratio N/V filtré se trouve entre deux valeurs limites sélectionnées pendant la durée de validation prédéterminée. Avantageusement, le gain du filtre dépend du régime N et du rapport de boîte actuellement engagé.

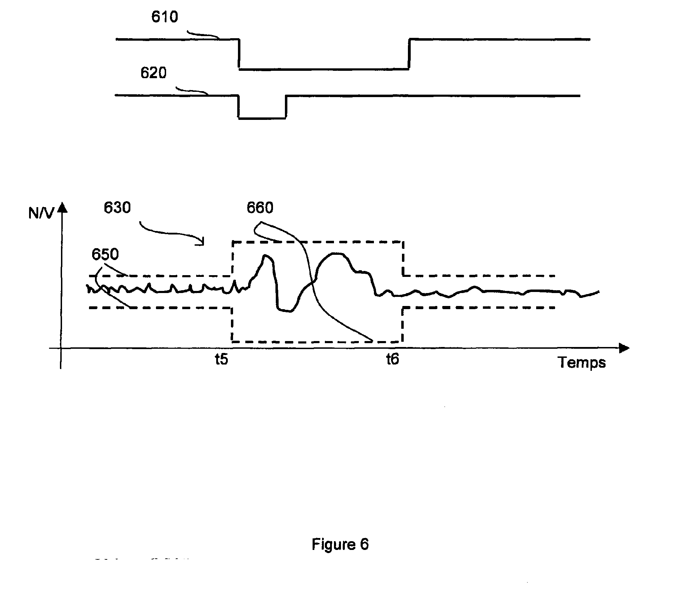

On observe en figure 5 un relevé du ratio N/V des vitesses d'entrée et de sortie de boîte, au cours d'un changement de rapport de boîte. On observe en figure 6 un relevé du ratio N/V des vitesses d'entrée et de sortie de boîte, lors de "pompage" sur la pédale d'accélération. Par simplification, on considère que la boîte de vitesse du véhicule ne comporte que deux rapports, identifiés par "1" et "2".

Dans les relevés des figures 5 et 6, le déroulement du temps est représenté, sans unité, en abscisse. Une première ligne supérieure 510 (respectivement 610) indique que, pendant la durée de sélection prédéterminée, la valeur absolue de la dérivée par rapport au temps (ou gradient) de la vitesse de rotation en entrée de boîte n'a pas excédé un seuil prédéterminé et que, pendant la durée de sélection, la dérivée par rapport au temps de la vitesse de rotation en entrée de boîte a conservé son signe, état haut ou, que l'une de ces conditions n'a pas été remplie, état bas. Une deuxième ligne supérieure 520 (respectivement 620) indique si soit le papillon de gaz est en position fermée, soit l'état du moteur n'est ni à pleine charge ni à charge partielle, état haut, ou si aucune de ces conditions n'est remplie, état bas.

En figure 5, un graphe 590 représente le rapport de boîte détecté par la mise en oeuvre du mode de réalisation de l'invention illustré en figures 1 à 4, le rapport "0" représentant l'absence de rapport engagé, "1" (respectivement "2") représentant la détection que le premier (respectivement le deuxième) rapport de boîte est engagé.

En figure 5, un graphe 530 comporte une courbe de valeurs de ratio N/V 540, un jeu de valeurs limites larges 550 affecté à un premier rapport de boîte, un jeu de valeurs limites étroit 560 affecté au premier rapport de boîte, un jeu de valeurs limites larges 570 affecté à un deuxième rapport de boîte, un jeu de valeurs limites étroit 580 affecté à ce deuxième rapport de boîte et, en traits discontinus, les valeurs limites du ou des jeu(x) de valeurs limites sélectionné(s) à chaque instant.

On suppose qu'au début de la courbe de valeurs de ratio N/V 540, à gauche, il a été détecté que le premier rapport de boîte est engagé (on observe que ce ratio N/V reste sensiblement constant.) Conformément au mode de réalisation de l'invention illustré en figures 1 à 4, tant que l'une, au moins, des deux lignes supérieures est dans un état bas, le jeu de valeurs limites large correspondant au premier rapport de boîte est sélectionné. Lorsque les deux lignes supérieures sont dans un état haut, le jeu de valeurs limites étroit correspondant au premier rapport de boîte est sélectionné.

A l'instant t1, le ratio N/V franchit la valeur limite supérieure sélectionnée. Si, comme en figure 5, au cours de la durée de confirmation T1 suivant l'instant t1, le ratio N/V est supérieur à la valeur limite supérieure sélectionnée, à l'instant t1 + T1, le calculateur détermine qu'aucun rapport de boîte n'est plus engagé (le rapport "0" étant alors "engagé".)

A partir de cet instant t1 + T1, le jeu de valeurs limites étroit est sélectionné pour le premier rapport de boîte, qui vient d'être désengagé, et le jeu de valeurs limites large est sélectionné pour le deuxième rapport de boîte. A l'instant t2, le ratio N/V franchit la valeur limite inférieure du jeu de valeurs limites sélectionné pour le deuxième rapport de boîte. Comme illustré en figure 5, au cours de la durée de validation T2 suivant l'instant t2, le ratio N/V reste entre les valeurs limites du jeu de valeurs limites sélectionné pour le deuxième rapport de boîte. En conséquence, à l'instant t2 + T2, le calculateur détermine que le deuxième rapport de boîte est engagé.

Seules les valeurs limites du jeu large correspondant au deuxième rapport de boîte restent alors sélectionnées. Lorsque, entre l'instant t3 et l'instant t4, les deux lignes supérieures sont dans un état haut, le jeu de valeurs limites étroit correspondant au deuxième rapport de boîte est sélectionné.

En figure 6, un graphe 630 comporte une courbe de valeurs de ratio N/V 640, un jeu de valeurs limites étroit 650 affecté au premier rapport de boîte, un jeu de valeurs limites large 660 affecté au premier rapport de boîte et, en traits discontinus, les valeurs limites du jeu de valeurs limites sélectionnée à chaque instant.

On suppose qu'au début de la courbe de valeurs de ratio N/V 640, à gauche, il a été détecté que le premier rapport de boîte est engagé (on observe que ce ratio reste sensiblement constant) et que le jeu de valeurs limites étroit est sélectionné. Conformément au mode de réalisation de l'invention illustré en figures 1 à 4, lorsque le conducteur du véhicule effectue un "pompage" sur sa pédale d'accélérateur, à partir de l'instant t5, la première ligne supérieur 610 passe à l'état bas parce que la valeur absolue de la dérivée par rapport au temps (ou gradient) de la vitesse de rotation en entrée de boîte excède un seuil prédéterminé. Le jeu de valeurs limites large correspondant au premier rapport de boîte est, en conséquence, sélectionné. On observe que la deuxième ligne supérieur 620 passe aussi à l'état bas lorsque le conducteur appuie sur la pédale d'accélérateur. Lorsque, après la phase de pompage, à l'instant t6, les deux lignes supérieures sont dans un état haut, le jeu de valeurs limites étroit correspondant au premier rapport de boîte est, de nouveau, sélectionné.

En conséquence il est détecté que le rapport de boîte est restée engagé pendant l'intervalle de temps entre les instants t5 et t6 grâce au changement de valeurs sélectionnées.

Selon des variantes, les durées de confirmation ou de validation (pour la détection d'un débrayage) varient en fonction du rapport de boîte engagé. Selon des variantes, la durée de validation varie en fonction du rapport de boîte détecté (lors de la détection d'un embrayage.) Selon des variantes, les filtres utilisés pour filtrer le ratio N/V dépendent du régime moteur N, du rapport de boîte engagé (pour détecter un débrayage) et/ou du rapport de boîte détecté (lors d'un embrayage.) Selon des variantes, les valeurs limites potentielles utilisées pour détecter un embrayage sont différentes des valeurs limites potentielles utilisées pour détecter un débrayage.

Dans des variantes, indépendamment du régime moteur, lorsque le papillon est fermé, on sélectionne un jeu de valeurs limites plus proche de la valeur nominale correspondant au rapport de démultiplication prédéterminé que lorsque le papillon de gaz est ouvert.

Dans des variantes, indépendamment du régime moteur, lorsque l'état moteur n'est ni en pleine charge ni en charge partielle, on sélectionne un jeu de valeurs limites plus proche de la valeur nominale correspondant au rapport de démultiplication prédéterminé que lorsque l'état moteur est au moins à charge partielle.

Dans des variantes, indépendamment de la position du papillon de gaz ou de la charge du moteur, on teste si la valeur absolue de la dérivée par rapport au temps de la vitesse de rotation en entrée de boîte n'a pas excédé un seuil prédéterminé et si, pendant la durée de sélection, la dérivée par rapport au temps de la vitesse de rotation en entrée de boîte a conservé son signe, c'est-à-dire que la vitesse de rotation en entrée de boîte est restée croissante ou décroissante et, lorsque ces deux conditions sont remplies, on sélectionne un jeu de valeurs limites plus proche de la valeur nominale correspondant au rapport de démultiplication prédéterminé que lorsque aucune de ces conditions n'est remplie.

Dans des variantes, on compare la valeur absolue de la différence entre le ratio N/V et une valeur nominale correspondant à un rapport de démultiplication prédéterminé avec une valeur limite sélectionnée.

**Revendications**

1. Procédé de reconnaissance du rapport engagé d'une boîte de vitesses (3) d'un véhicule automobile (1), procédé mettant en oeuvre un signal (N) correspondant à la vitesse de rotation d'entrée de la boîte et un signal (V) correspondant à la vitesse de rotation de sortie de la boîte, comportant une opération de détermination d'engagement de rapport (404) au cours de laquelle on détermine quel rapport de boîte est engagé, en fonction de la position relative du ratio desdits signaux $\frac{N}{V}$ et de valeurs limites d'au moins un jeu de valeurs limites, chaque jeu de valeurs limites correspondant à un rapport de boîte ; **caractérisé en ce qu'**il comporte une opération de sélection (402, 408, 414, 420, 422, 424, 426) au cours de laquelle, pour au moins un rapport de boîte, on sélectionne le jeu de valeurs limites entre au moins deux jeux de valeurs limites potentiels (306, 308, 312, 314, 316, 318, 322, 324, 326, 328, 332, 334, 336, 338, 342, 344, 346, 348, 352, 354.)

2. Procédé selon la revendication 1, **caractérisé en ce qu'**au cours de l'opération de sélection de ladite valeur limite (422), on met en oeuvre une position d'un volet d'entrée d'air d'un boîtier papillon ou la charge du moteur, et lorsque :

le papillon est fermé ou que l'état du moteur n'est ni en pleine charge ni en charge partielle, la valeur absolue de la dérivée par rapport au temps de la vitesse de rotation en entrée de boîte n'a pas excédé un seuil prédéterminé pendant une durée dite "de sélection" et pendant la durée de sélection, la dérivée par rapport au temps de la vitesse de rotation en entrée de boîte a conservé son signe, c'est-à-dire que la vitesse de rotation en entrée de boîte est restée croissante ou décroissante, on sélectionne un jeu de valeurs limites plus proches de la valeur nominale correspondant au rapport de démultiplication -prédéterminé -que lorsque aucune-de -ces conditions n'est remplie.

3. Procédé selon l'une quelconque des revendications 1 ou 2, **caractérisé en ce qu'**au cours de l'opération de sélection de ladite valeur limite (422), on met en oeuvre une position d'un volet d'entrée d'air d'un boîtier papillon ou la charge du moteur, et lorsque :

le papillon est ouvert ou que l'état du moteur est soit en pleine charge soit en charge partielle, la valeur absolue de la dérivée par rapport au temps de la vitesse de rotation en entrée de boîte n'a pas excédé un seuil prédéterminé pendant une durée dite "de sélection" et pendant la durée de sélection, la dérivée par rapport au temps de la vitesse de rotation en entrée de boîte a conservé son signe, c'est-à-dire que la vitesse de rotation en entrée de boîte est restée croissante ou décroissante, on sélectionne un jeu de valeurs limites plus éloignées de la valeur nominale correspondant au rapport de démultiplication prédéterminé que lorsque aucune de ces conditions n'est remplie.

4. Procédé selon l'une quelconque des revendications 1 à 3, **caractérisé en ce qu'**au cours de l'opération de sélection de ladite valeur limite (422), on met en oeuvre une position d'un volet d'entrée d'air d'un boîtier papillon, ou papillon de gaz, et lorsque le papillon est fermé, on sélectionne un jeu de valeurs limites plus proches de la valeur nominale correspondant au rapport de démultiplication prédéterminé que lorsque le papillon de gaz est ouvert.

5. Procédé selon l'une quelconque des revendications 1 à 4, **caractérisé en ce qu'**au cours de l'opération de sélection de ladite valeur limite (422), on met en oeuvre la charge du moteur et lorsque l'état moteur n'est ni en pleine charge ni en charge partielle, on sélectionne un jeu de valeurs limites plus proches de la valeur nominale correspondant au rapport de démultiplication prédéterminé que lorsque l'état moteur est au moins à charge partielle.

6. Procédé selon l'une quelconque des revendications 1 à 5, **caractérisé en ce qu'**au cours de l'opération de sélection de ladite valeur limite (420), on teste si la valeur absolue de la dérivée par rapport au temps de la vitesse de rotation en entrée de boîte n'a pas excédé un seuil prédéterminé pendant une durée dite "de sélection" et si, pendant la durée de sélection, la dérivée par rapport au temps de la vitesse de rotation en entrée de boîte a conservé son signe, c'est-à-dire que la vitesse de rotation en entrée de boîte est restée croissante ou décroissante, et, lorsque ces deux conditions sont remplies, on sélectionne un jeu de valeurs limites plus proches de la valeur nominale correspondant au rapport de démultiplication prédéterminé que lorsque aucune de ces conditions n'est remplie.

7. Procédé selon l'une quelconque des revendications 1 à 6, **caractérisé en ce qu'**il comporte, lorsqu'il a été détecté qu'aucun rapport de boîte n'est engagé, une opération de validation de rapport de boîte engagé (404) au cours de laquelle on détermine qu'un rapport de boîte est engagé lorsque, pendant une durée dite "de validation", pour ledit rapport de boîte, ledit ratio reste entre deux valeurs limites du jeu de valeurs limites sélectionné pour ledit rapport de boîte.

8. Procédé selon l'une quelconque des revendications 1 à 7, **caractérisé en ce que**, lorsqu'il a été détecté qu'un rapport de boîte est engagé, au cours de l'opération de sélection, on sélectionne un jeu de deux valeurs limites, l'une supérieure à la valeur nominale correspondant audit rapport de boîte et l'autre inférieure à ladite valeur nominale correspondant audit rapport, chacune des deux valeurs limites étant sélectionnée entre au moins deux valeurs limites potentielles.

**9.** Procédé selon l'une quelconque des revendications 1 à 8, **caractérisé en ce que** lorsqu'il a été détecté qu'aucun rapport de boîte n'est engagé, au cours de l'opération de sélection, on sélectionne un jeu de valeurs limites pour chaque rapport de boîte, les valeurs limites du jeu de valeurs limites sélectionné pour le précédent rapport de boîte engagé étant plus proches de la valeur nominale correspondant au rapport de démultiplication prédéterminé que les valeurs limites du jeu de valeurs limites sélectionné pour les autres rapports de boîte.

**10.** Dispositif de reconnaissance du rapport engagé d'une boîte de vitesses (3) d'un véhicule automobile (1), comportant un capteur de vitesse de rotation d'entrée de boîte fournissant un signal (N) correspondant à la vitesse de rotation d'entrée de la boîte (14) et un capteur de vitesse de rotation de sortie de boîte (15) fournissant un signal (V) correspondant à la vitesse de rotation de sortie de la boîte, comportant un moyen de détermination d'engagement de rapport (18) qui détermine quel rapport de boîte est engagé, en fonction de la position relative du ratio $\dfrac{N}{V}$ desdits signaux et de valeurs limites d'au moins un jeu de valeurs limites, chaque jeu de valeurs limites correspondant à un rapport de boîte ; **caractérisé en ce qu'**il comporte un moyen de sélection (18) de jeu de valeurs limites qui, pour au moins un rapport de boîte, sélectionne le jeu de valeurs limites entre au moins deux jeux de valeurs limites potentiels.

**Claims**

**1.** Method for recognizing the engaged gear of a gear box (3) of a motor vehicle (1), the method implementing a signal (N) corresponding to the input rotation speed of the box and a signal (V) corresponding to the output rotation speed of the box, comprising a ratio engagement determination operation (404) during which the engaged gear box ratio is determined, according to the relative position of the ratio of said signals $\dfrac{N}{V}$ and of limit values of at least one set of limit values, each set of limit values corresponding to a gear box ratio; **characterized in that** it comprises a selection operation (402, 408, 414, 420, 422, 424, 426) during which, for at least one gear box ratio, the set of limit values is selected from at least two potential sets of limit values (306, 308, 312, 314, 316, 318, 322, 324, 326, 328, 332, 334, 336, 338, 342, 344, 346, 348, 352, 354).

**2.** Method according to Claim 1, **characterized in that**, during the operation for selecting said limit value (422), a position of an air inlet flap of a throttle valve box or the load of the engine is applied, and when:

the throttle valve is closed or the state of the engine is neither under full load nor under partial load,
the absolute value of the drift relative to the time of the rotation speed at the box input has not exceeded a predetermined threshold during a so-called "selection" period and
during the selection period, the drift relative to the time of the rotation speed at the box input has retained its sign, that is to say that the rotation speed at the box input has remained increasing or decreasing,
a set of limit values closer to the nominal value corresponding to the predetermined gear ratio than when none of these conditions is satisfied is selected.

**3.** Method according to any one of Claims 1 or 2, **characterized in that**, during the operation for selecting said limit value (422), a position of an air inlet flap of a throttle valve box or the engine load is applied, and when:

the throttle valve is open or the state of the engine is either under full load or under partial load,
the absolute value of the drift relative to the time of the rotation speed at the box input has not exceeded a predetermined threshold during a so-called "selection" period and
during the selection period, the drift relative to the time of the rotation speed at the box input has retained its sign, that is to say that the rotation speed at the box input has remained increasing or decreasing,
a set of limit values more distant from the nominal value corresponding to the predetermined gear ratio than when none of these conditions is satisfied is selected.

**4.** Method according to any one of Claims 1 to 3, **characterized in that**, during the operation to select said limit value (422), a position of an air inlet flap of a throttle valve box, or gas throttle valve, is applied, and when the throttle valve is closed, a set of limit values closer to the nominal value corresponding to the predetermined gear ratio than when the gas throttle valve is open is selected.

**5.** Method according to any one of Claims 1 to 4, **characterized in that**, during the operation to select said limit value (422), the load of the engine is applied and when the engine state is neither under full load nor under partial load, a set of limit values closer to the nominal value corresponding to the predetermined gear ratio than when the engine state is at least under partial load is selected.

6. Method according to any one of Claims 1 to 5, **characterized in that**, during the operation to select said limit value (420), a test is carried out to see if the absolute value of the drift relative to the time of the rotation speed at the box input has not exceeded a predetermined threshold during a so-called "selection" period and if, during the selection period, the drift relative to the time of the rotation speed at the box input has retained its sign, that is to say that the rotation speed at the box input has remained increasing or decreasing, and, when these two conditions are satisfied, a set of limit values closer to the nominal value corresponding to the predetermined gear ratio than when none of these conditions is satisfied is selected.

7. Method according to any one of Claims 1 to 6, **characterized in that** it includes, when it has been detected that no gear ratio is engaged, an operation to validate the engaged gear ratio (404) during which it is determined that a gear ratio is engaged when, during a so-called "validation" period, for said gear ratio, said ratio remains between two limit values of the set of limit values selected for said gear ratio.

8. Method according to any one of Claims 1 to 7, **characterized in that**, when it has been detected that a gear ratio is engaged, during the selection operation, a set of two limit values is selected, one greater than the nominal value corresponding to said gear ratio and the other less than said nominal value corresponding to said ratio, each of the two limit values being selected between at least two potential limit values.

9. Method according to any one of Claims 1 to 8, **characterized in that**, when it has been detected that no gear ratio is engaged, during the selection operation, a set of limit values is selected for each gear ratio, the limit values of the set of limit values selected for the preceding engaged gear ratio being closer to the nominal value corresponding to the predetermined gear ratio than the limit values of the set of limit values selected for the other gear ratios.

10. Device for recognizing the engaged ratio of a gear box (3) of a motor vehicle (1), comprising a box input rotation speed sensor supplying a signal (N) corresponding to the input rotation speed of the box (14) and a box output rotation speed sensor (15) supplying a signal (V) corresponding to the box output rotation speed, comprising a ratio engagement determination means (18) which determines which gear ratio is engaged, according to the relative position of the ratio $\frac{N}{V}$ of said signals and of limit values of at least one set of limit values, each set of limit values corresponding to a gear ratio; **characterized in that** it comprises a limit value set selection means (18) which, for at least one gear ratio, selects the set of limit values from at least two potential sets of limit values.

**Patentansprüche**

1. Verfahren zum Erkennen des eingelegten Gangs eines Getriebes (3) eines Kraftfahrzeugs (1), wobei bei dem Verfahren ein Signal (N) verwendet wird, das der Eingangsdrehzahl des Getriebes entspricht, und ein Signal (V), das der Ausgangsdrehzahl des Getriebes entspricht, umfassend einen Vorgang zum Ermitteln des Einlegens des Gangs (404), in dessen Verlauf in Abhängigkeit von der relativen Position des Verhältnisses der Signale (N/V) und von Grenzwerten aus mindestens einem Satz von Grenzwerten ermittelt wird, welche Gangstufe eingelegt ist, wobei jeder Satz von Grenzwerten einer Gangstufe entspricht; **dadurch gekennzeichnet, dass** es einen Wahlvorgang (402, 408, 414, 420, 422, 424, 426) umfasst, in dessen Verlauf für mindestens eine Gangstufe der Satz von Grenzwerten zwischen mindestens zwei potentiellen Sätzen von Grenzwerten (306, 308, 312, 314, 316, 318, 322, 324, 326, 328, 332, 334, 336, 338, 342, 344, 346, 348, 352, 354) gewählt wird.

2. Verfahren nach Anspruch 1, **dadurch gekennzeichnet, dass** während des Wahlvorgangs des Grenzwerts (422) die Position einer Lufteinlassklappe eines Drosselklappenstutzens oder die Motorlast verwendet wird, und wenn:

die Drosselklappe geschlossen ist oder wenn der Motor weder in Volllast noch Teillast betrieben wird,
der Absolutwert der Ableitung der Eingangsdrehzahl des Getriebes nach der Zeit während einer sogenannten "Wähldauer" eine festgelegte Schwelle nicht überschritten hat, und
die Ableitung der Eingangsdrehzahl des Getriebes nach der Zeit während der Wähldauer ihr Vorzeichen behalten hat, das heißt, wenn die Eingangsdrehzahl des Getriebes weiter angestiegen oder gefallen ist,
wird ein Satz von Grenzwerten gewählt, die näher am Nennwert liegen, der dem festgelegten Untersetzungsverhältnis entspricht, als wenn keine dieser Bedingungen erfüllt ist.

3. Verfahren nach einem der Ansprüche 1 oder 2, **da-**

**durch gekennzeichnet, dass** während des Wahlvorgangs des Grenzwerts (422) die Position einer Lufteinlassklappe eines Drosselklappenstutzens oder die Motorlast verwendet wird, und wenn:

die Drosselklappe geöffnet ist oder wenn der Motor entweder in Volllast oder Teillast betrieben wird,
der Absolutwert der Ableitung der Eingangsdrehzahl des Getriebes nach der Zeit während einer sogenannten "Wähldauer" eine festgelegte Schwelle nicht überschritten hat, und
die Ableitung der Eingangsdrehzahl des Getriebes nach der Zeit während der Wähldauer ihr Vorzeichen behalten hat, das heißt, wenn die Eingangsdrehzahl des Getriebes weiter angestiegen oder gefallen ist,
wird ein Satz von Grenzwerten gewählt, die weiter weg vom Nennwert liegen, der dem festgelegten Untersetzungsverhältnis entspricht, als wenn keine dieser Bedingungen erfüllt ist.

4. Verfahren nach einem der Ansprüche 1 oder 2, **dadurch gekennzeichnet, dass** während des Wahlvorgangs des Grenzwerts (422) die Position einer Lufteinlassklappe eines Drosselklappenstutzens oder Drosselklappe verwendet wird, und wenn die Drosselklappe geschlossen ist, wird ein Satz von Grenzwerten gewählt, die näher am Nennwert liegen, der dem festgelegten Untersetzungsverhältnis entspricht, als wenn die Drosselklappe geöffnet ist.

5. Verfahren nach einem der Ansprüche 1 bis 4, **dadurch gekennzeichnet, dass** während des Wahlvorgangs des Grenzwerts (422) die Motorlast verwendet wird und wenn der Motor weder in Volllast noch Teillast betrieben wird, wird ein Satz von Grenzwerten gewählt, die näher am Nennwert liegen, der dem festgelegten Untersetzungsverhältnis entspricht, als wenn der Motor zumindest in Teillast betrieben wird.

6. Verfahren nach einem der Ansprüche 1 bis 5, **dadurch gekennzeichnet, dass** während des Wahlvorgangs des Grenzwerts (420) geprüft wird, ob der Absolutwert der Ableitung der Eingangsdrehzahl des Getriebes nach der Zeit während einer sogenannten "Wähldauer" eine festgelegte Schwelle nicht überschritten hat, und ob die Ableitung der Eingangsdrehzahl des Getriebes nach der Zeit während der Wähldauer ihr Vorzeichen behalten hat, das heißt, ob die Eingangsdrehzahl des Getriebes weiter angestiegen oder gefallen ist, und wenn diese beiden Bedingungen erfüllt sind, wird ein Satz von Grenzwerten gewählt, die näher am Nennwert liegen, der dem festgelegten Untersetzungsverhältnis entspricht, als wenn keine dieser Bedingungen erfüllt ist.

7. Verfahren nach einem der Ansprüche 1 bis 6, **dadurch gekennzeichnet, dass** es, wenn festgestellt wurde, dass keine Gangstufe eingelegt ist, einen Vorgang zum Bestätigen der eingelegten Gangstufe (404) umfasst, in dessen Verlauf ermittelt wird, dass eine Gangstufe eingelegt ist, wenn das Verhältnis während einer sogenannten "Bestätigungsdauer" für diese Gangstufe zwischen zwei Grenzwerten des Satzes von Grenzwerten bleibt, der für die Gangstufe ausgewählt wurde.

8. Verfahren nach einem der Ansprüche 1 bis 7, **dadurch gekennzeichnet, dass** wenn festgestellt wurde, dass eine Gangstufe eingelegt ist, während des Wahlvorgangs ein Satz von zwei Grenzwerten gewählt wird, wobei der eine größer ist als der Nennwert, der der Gangstufe entspricht, und der andere niedriger ist als der Nennwert, der dem Gang entspricht, wobei jeder der beiden Grenzwerte zwischen mindestens zwei potentiellen Grenzwerten ausgewählt ist.

9. Verfahren nach einem der Ansprüche 1 bis 8, **dadurch gekennzeichnet, dass** wenn festgestellt wurde, dass keine Gangstufe eingelegt ist, während des Wahlvorgangs ein Satz von Grenzwerten für jede Gangstufe gewählt wird, wobei die Grenzwerte des Satzes von Grenzwerten, der für die vorhergehende eingelegte Gangstufe ausgewählt ist, näher am Nennwert liegen, der dem festgelegten Untersetzungsverhältnis entspricht, als die Grenzwerte des Satzes von Grenzwerten, der für die anderen Gangstufen ausgewählt ist.

10. Vorrichtung zum Erkennen des eingelegten Gangs eines Getriebes (3) eines Kraftfahrzeugs (1), umfassend einen Sensor für die Eingangsdrehzahl des Getriebes, der ein Signal (N) liefert, das der Eingangsdrehzahl des Getriebes (14) entspricht, und einen Sensor für die Ausgangsdrehzahl des Getriebes (15), der ein Signal (V) liefert, das der Ausgangsdrehzahl des Getriebes entspricht, umfassend ein Mittel zum Ermitteln des Einlegens des Gangs (18), das in Abhängigkeit von der relativen Position des Verhältnisses (N/V) der Signale und von Grenzwerten aus mindestens einem Satz von Grenzwerten ermittelt, welche Gangstufe eingelegt ist, wobei jeder Satz von Grenzwerten einer Gangstufe entspricht; **dadurch gekennzeichnet, dass** sie ein Mittel zum Wählen (18) des Satzes von Grenzwerten umfast, das für mindestens eine Gangstufe den Satz von Grenzwerten zwischen mindestens zwei potentiellen Sätzen von Grenzwerten wählt.

Figure 1

Figure 2

Figure 3

```
                    ┌─────────────────────┐
                    │   Initialisation    │──── 400
                    └─────────────────────┘
                              │
                              ▼
                    ┌─────────────────────┐
                    │ Selection jeux larges│──── 402
                    │   tous rapports     │
                    └─────────────────────┘
                              │
                              ▼
         Non              ◇─────────◇
    ┌──────────────────── │ Rapport  │──── 404
    │                     │ engagé ? │
    │                     ◇─────────◇
    │                          │ Oui
    │                          ▼
    │                 ┌─────────────────────┐
    │                 │   Mémorisation      │──── 406
    │                 │   rapport engagé    │
    │                 └─────────────────────┘
    │                          │
    │                          ▼
    │                 ┌─────────────────────┐
    │                 │  Séléction jeu large │──── 408
    │                 │   rapport engagé    │
    │                 └─────────────────────┘
    │                          │
    │                          ▼
    │       Oui           ◇─────────◇          Non
    │  ┌──────────────────│Valeur limite│──────────────┐
    │  │                  │  franchie ? │              │
    │  │                  ◇─────────◇ 410            │
    │  ▼                                              ▼
    │ ┌─────────────────┐              Non        ◇─────────◇
    │ │  Mémorisation   │          ┌──────────────│  Régime  │
    │ │   débrayage     │── 412    │              │ stable ? │
    │ └─────────────────┘          │              ◇─────────◇
    │          │                   │                   │ Oui  420
    │          ▼                   │                   ▼
    │ ┌─────────────────┐   Non    │              ◇─────────◇
    │ │Sélection jeu large tous│   │         ┌────│  Charge  │
    │ │rapports sauf précédent│── 414 │         │    │moteur réduite ?│
    │ │  rapport engagé │        │         │    ◇─────────◇
    │ └─────────────────┘        │         │         │ Oui  422
    │          │                 │    424  │         ▼
    │ Non      ▼                 │         │  ┌─────────────────┐
    └──── ◇─────────◇            │         │  │ Sélection jeu étroit│
          │Moteur arrêté ?│      │         │  │  rapport engagé │
          ◇─────────◇ 416        │         │  └─────────────────┘
               │ Oui             │         │         │
               ▼                 │    426  │         │
     ┌─────────────────┐         │         ▼         │
     │       Fin       │         │  ┌─────────────────┐
     └─────────────────┘ 418     │  │ Sélection jeu large│
                                 │  │  rapport engagé │
                                 │  └─────────────────┘
                                 └────────┘
```

Figure 4

Figure 5

Figure 6

**EP 1 271 005 B1**

## RÉFÉRENCES CITÉES DANS LA DESCRIPTION

**Documents brevets cités dans la description**

- FR 2752031